# EUROPÄISCHE PATENTSCHRIFT

(11) **EP 1 278 648 B1**
(45) Veröffentlichungstag und Bekanntmachung des Hinweises auf die Patenterteilung: **14.05.2008**
(21) Anmeldenummer: 01936295.3
(22) Anmeldetag: 28.04.2001
(51) Int. Cl.: B60W 30/14, B60W 10/10, B60W 10/04, F16H 61/02

(54) **VERFAHREN ZUR STEUERUNG EINES AUTOMATGETRIEBES FÜR EIN KRAFTFAHRZEUG**
METHOD FOR CONTROLLING AN AUTOMATIC TRANSMISSION FOR A MOTOR VEHICLE
PROCEDE DE COMMANDE D'UNE BOITE DE VITESSE AUTOMATIQUE D'UN VEHICULE AUTOMOBILE

(30) Priorität: 04.05.2000 DE 10021770
(43) Veröffentlichungstag der Anmeldung: 29.01.2003
(73) Patentinhaber: ZF FRIEDRICHSHAFEN Aktiengesellschaft, 88038 Friedrichshafen (DE)
(72) Erfinder: HENNEKEN, Markus, 88079 Kressbronn (DE); JAUCH, Friedemann, 88069 Tettnang (DE); HERBSTER, Kai-Uwe, 88046 Friedrichshafen (DE); SCHULER, Franz-Josef, 88079 Kressbronn (DE); MAUZ, Thomas, 88085 Langenargen (DE)
(86) Internationale Anmeldenummer: PCT/EP2001/004813
(87) Internationale Veröffentlichungsnummer: WO 2001/083252

(56) Entgegenhaltungen:
- EP-A- 0 284 001
- EP-A- 1 053 903
- US-A- 4 463 822
- US-A- 4 560 024
- US-A- 5 038 880
- US-A- 5 806 009
- PATENT ABSTRACTS OF JAPAN vol. 015, no. 035 (M-1074), 28. Januar 1991 (1991-01-28) & JP 02 274635 A (NIPPONDENSO CO LTD), 8. November 1990 (1990-11-08)
- PATENT ABSTRACTS OF JAPAN vol. 016, no. 094 (M-1219), 9. März 1992 (1992-03-09) & JP 03 273938 A (MAZDA MOTOR CORP), 5. Dezember 1991 (1991-12-05)
- PATENT ABSTRACTS OF JAPAN vol. 014, no. 517 (M-1047), 13. November 1990 (1990-11-13) & JP 02 216328 A (MITSUBISHI MOTORS CORP), 29. August 1990 (1990-08-29)

## Beschreibung

Die vorliegende Erfindung betrifft ein Verfahren zur Steuerung eines Automatgetriebes für ein Kraftfahrzeug, das mit einer Fahrgeschwindigkeitsregelung versehen ist, wobei bei manueller Aktivierung der Fahrgeschwindigkeitsregelung im Zustand "Setzen" durch den Fahrer in ein Fahrprogramm gewechselt wird zur konstanten Einhaltung der bei der Aktivierung anliegenden Geschwindigkeit des Kraftfahrzeuges, das verlassen wird sowie das Kraftfahrzeug automatisch oder durch den Fahrer abgebremst oder durch den Fahrer beschleunigt wird, wodurch die Fahrgeschwindigkeitsregelung in den Zustand "Wiederherstellen" übergeht.

Zur Erhöhung des Fahrkomforts werden in modernen Kraftfahrzeugen immer öfter Fahrgeschwindigkeitsregelungen eingesetzt. Der Fahrer stellt während des Fahrbetriebs einen bestimmten Geschwindigkeitswert im Zustand "Setzen" der Fahrgeschwindigkeitsregelung ein, wobei die Geschwindigkeit auf diesem Sollwert gehalten wird. Dabei kann z. B. eine Motorsteuerung und eine Bremssteuerung zum Einsatz kommen. Wenn der Fahrer die Bremse oder das Gaspedal betätigt, wird der Regelbetrieb beendet, wobei die Fahrgeschwindigkeitsregelung in den Zustand "Wiederherstellen" übergeht. Zu einem späteren Zeitpunkt kann der Fahrer den zuletzt eingestellten Geschwindigkeitswert wieder auf Knopfdruck aktivieren und die dazugehörige Sollgeschwindigkeit einregeln lassen.

Bei Verwendung einer adaptiven Fahrgeschwindigkeitsregelung, wie sie unter der Bezeichnung ACC (= Adaptive Cruise Control) bekannt ist, wird das Kraftfahrzeug automatisch abgebremst, wenn ein bestimmter Abstand zu einem vorausfahrenden Objekt unterschritten wird. Bei ausreichenden Abstand zwischen Objekt und Kraftfahrzeug wird der ursprüngliche Zustand automatisch wieder hergestellt, d. h. das Kraftfahrzeug beschleunigt. Das "Wiederherstellen" wird damit nicht vom Fahrer, sondern von der ACC ausgelöst.

Es sind zahlreiche Verfahren zur Fahrgeschwindigkeitsregelung sowie zahlreiche Fahrgeschwindigkeitsregler bekannt geworden. So beschreibt die DE A 40 37 248 eine Fahrgeschwindigkeits-Regelvorrichtung für ein Kraftfahrzeug, das mit einem Antriebsmotor und mit einem durch eine elektronische Getriebesteuervorrichtung gesteuerten Getriebe versehen ist. Ein elektronischer Fahrgeschwindigkeitsregler wirkt auf den Antriebsmotor ein, wobei in Abhängigkeit der Regelabweichung das Motormoment über ein Stellglied verändert wird. Durch weitere bei vorgebbaren Randbedingungen auslösbare auf die Fahrgeschwindigkeit durch Eingriff in die Steuerung des Getriebes einwirkende Steuermittel kann erreicht werden, dass die Fahrgeschwindigkeit auch im Schiebebetrieb wirksam begrenzt werden kann, insbesondere bei stark beladenem oder mit Anhänger versehenem Fahrzeug bei steiler Bergabfahrt.

Hier wird also eine Unterstützung der Fahrgeschwindigkeitsregelung vorgeschlagen, mit der wenigstens eine Rückschaltung in einem kleineren Getriebegang und/oder das Schließen einer Wandlerkupplung ausgelöst werden. Dadurch soll auch bei Steigung und Gefälle ein geeigneter Gang für die Fahrgeschwindigkeitsregelung ausgewählt werden. Dieses Verfahren ist jedoch äußerst aufwendig, insbesondere auch bei der Abstimmung auf unterschiedliche Fahrzeuge.

In der DE A 43 38 399 ist ein Verfahren und eine Vorrichtung zur Steuerung eines Fahrzeugs beschrieben, wobei die Motorleistung von einer ersten Steuereinheit beeinflußbar ist. Die Bremsleistung wird von einer zweiten Steuereinheit beeinflußt. Beide Steuereinheiten wirken im Sinne einer Fahrgeschwindigkeitsregelung oder einer Fahrgeschwindigkeitsbegrenzung zusammen. Ausgehend von wenigstens einer der Größen Drehzahl, Geschwindigkeit, Beschleunigung, eingespritzter Kraftstoffmenge und/oder Drosselklappenstellung wird abgeschätzt, ob eine Rücknahme der Motorleistung ausreicht, um eine Sollgeschwindigkeit einzuhalten. Gegebenenfalls erhöht die zweite Steuereinheit die Bremsleistung.

Die erste Steuereinheit kann dabei ein elektronisches Gaspedal, eine Einrichtung zur Kraftstoffzumessung oder eine elektronische Dieselregelung sein. Die zweite Steuereinheit kann das ABS-Steuergerät und/oder ein ASR-Steuergerät sein. Eine Steuerung des Getriebes ist in dieser Vorveröffentlichung nicht angegeben.

Die DE A 196 00 734 beschreibt ein Verfahren zur Steuerung von Aggregaten und/oder Systemen eines Kraftfahrzeuges unter Verarbeitung von Informationen zur Erfassung der Fahrumgebung, des Fahrzustandes, zur Positionsbestimmung oder dgl., wobei aktuelle und/oder im Fahrzeug mitgeführte und/oder vom Fahrer-Fahrzeug-System abgeleitete Daten miteinander verknüpft und zu einer Stellgröße aufbereitet werden, mit der zumindest ein einzelnes Aggregat und/oder ein System des Fahrzeugs in seiner Arbeitsweise beeinflußt ist. Dabei können aktuelle Daten zur Positionsbestimmung mittels eines GPS (= Global Positioning System) mit im Fahrzeug mitgeführten statischen Daten miteinander verknüpft und zu einer Stellgröße aufbereitet werden, mit der zumindest ein Schaltprogramm eines Automatgetriebes adaptiert und/oder aktiviert und/oder variiert wird. Hiermit wird das Ziel verfolgt, dem Fahrer eines Kraftfahrzeuges das Fahren vor allem in besonderen Situationen oder Fahrumgebungen zu erleichtern. Dazu zählen vor allem Assistenz bei der Orientierung z.B. im Stadtverkehr, Hinweise, die ihm Unannehmlichkeiten wie Zeitverluste durch Staus ersparen, sowie technische Unterstützung in kritischen Situationen, z. B. auf Schnee und Eis. Ein Fahrgeschwindigkeitsregler ist hierbei nicht ausdrücklich vorgesehen.

Aus der Patentanmeldung DE 199 29 693.6 der Anmelderin ist die Betriebsstrategie eines stufenlosen Getriebes bekannt, bei dem der Fahrer über einen manuellen Eingriff das Betriebsverhalten eines Stufengetriebes nachbilden kann. Durch eine Geschwindigkeitsvorgabe wird die Übersetzung des Getriebes derart geregelt, dass eine Soll-Geschwindigkeit eingehalten wird. Ein Fahrgeschwindigkeitsregler als Zusatzaggregat wird dabei weder benötigt noch beschrieben. Das Verfahren entspricht beim Stufenautomaten in etwa der Auswahl eines Schaltprogramms im Modus der Fahrgeschwindigkeitsreglung. Eine Berücksichtigung der Fahrbahnneigung auf die Geschwindigkeitsvorgabe wird dabei nicht erwähnt.

US-A-5 038 880 zeigt ein Verfahren gemäss dem Oberbegriff des Anspruchs 1.

Aufgabe der vorliegenden Erfindung ist es, ein Verfahren zur Steuerung eines Automatgetriebes für ein Kraftfahrzeug mit einer Fahrgeschwindigkeitsreglung vorzuschlagen, das eine einfache und flexible Zuordnung von Gang- und Wandlerschaltkennlinien zu den Regelzuständen der Fahrgeschwindigkeitsregelung ermöglicht und bei dem durch eine einfache Handhabung in Abhängigkeit von äußeren Einflüssen, insbesondere der Fahrbahnneigung die Fahrprogramme zugeordnet werden.

Ausgehend von einem Verfahren der eingangs näher genannten Art erfolgt die Lösung dieser Aufgabe mit den im Anspruch 1 angegebenen Merkmalen; vorteilhafte Ausgestaltungen sind in den Unteransprüchen beschrieben.

Erfindungsgemäß ist also vorgesehen, dass die Getriebesteuerung bei Aktivierung der Fahrgeschwindigkeitsregelung "Tempomat" in ein gesondertes Fahrprogramm wechselt, das eine Funktion der äußeren Einflüsse auf das Kraftfahrzeug, insbesondere der Fahrbahnneigung, und eine Funktion eines vorgegebenen Fahrmodus ist und das ausgewählt ist aus einer Gruppe von Fahrprogrammen. Ein Fahrprogramm enthält dabei alle benötigten Gangschaltkennlinien und Wandlerschaltkennlinien für einen bestimmten Fahrmodus, d. h. einen sportlichen Modus, einen ökonomischen Modus, einen Bergmodus, einen Wintermodus, etc. Das ausgewählte Fahrprogramm wird je nach festgestellter Fahrbahnneigung (Berg, Ebene, Gefälle) ausgewählt und gegebenenfalls aktualisiert. Bei Deaktivierung der Fahrgeschwindigkeitsregelung durch den Fahrer geht die Fahrgeschwindigkeitsregelung wie bei den bekannten Fahrgeschwindigkeitsregelungen in den Zustand "Wiederherstellen" ein. Nunmehr kann erfindungsgemäß die Getriebesteuerung so eingestellt werden, daß die Fahrgeschwindigkeitsregelung sofort und damit die Auswahl eines entsprechenden Fahrprogramms als Funktion der äußeren Einflüsse oder erst dann erfolgen soll, wenn die Fahrgeschwindigkeitsregelung in den Zustand "Setzen" übergegangen ist.

Neben dem Vorteil einer einfachen und flexiblen Zuordnung von Gang- und Wandlerschaltkennlinien zu den Regelzuständen der Fahrgeschwindigkeitsregelung bzw. des zugehörigen Fahrgeschwindigkeitsreglers wird noch der Vorteil erzielt, dass die eingesetzten Fahrprogramme zwischen den Hoch- und Rückschaltkennlinien eine ausreichende Hysterese aufweisen können, um Schalthäufigkeiten zu vermeiden; eine Verringerung der Hysterese ist nur bei Bergfahrt gegenüber Gefällefahrt erforderlich, um genügend Zugkraft für das Kraftfahrzeug zur Verfügung zu stellen.

Bei Aktivierung der Fahrgeschwindigkeitsregelung, die manuell durch den Fahrer vorgenommen wird, erfolgt also ein Zugriff auf eine Anzahl besonders ausgelegter Fahrprogramme, mit einer überlagerten Bergerkennung, solange die Fahrgeschwindigkeitsregelung aktiv ist. Dies bietet insbesondere Vorteile bei schwach motorisierten Fahrzeugen bei Bergfahrt, da bei aktiver Fahrgeschwindigkeitsregelung Fahrleistungseinbußen vermieden werden können, sowie unerwünschte Doppel-Rückschaltungen und Pendelschaltungen.

Die Bergerkennung kann dabei über eine an und für sich bekannte Fahrwiderstandsberechnung, über einen Steigungssensor oder über ein GPS (= Global Positioning System) erfolgen. Ferner ist auch eine Überlagerung der Fahrprogramme durch Sonderfunktionen, die z. B. einen Warmlauf betreffen, möglich.

Die Fahraktivitätsberechnung läuft bei aktivierter Fahrgeschwindigkeitsregelung aktiv im Hintergrund mit, ohne einen direkten Einfluß auf die Auswahl der Fahrprogramme und damit der zugehörigen Schaltkennlinien auszuüben. Dies bietet Vorteile bei der Deaktivierung der Fahrgeschwindigkeitsregelung.

Eine mögliche Übergangsfunktionalität bei der Deaktivierung der Fahrgeschwindigkeitsregelung besteht in einem Sprung auf ein festes vordefiniertes Fahrprogramm; dies kann die Beibehaltung des zuletzt aktivierten Fahrprogramms bei noch aktiver Fahrgeschwindigkeitsregelung sein oder ein Sprung auf das dem im Fahrgeschwindigkeitsregelungs-Betrieb letztgültigen nächstliegenden, gegebenenfalls etwas ökonomischeren Normalprogramm oder aber ein Sprung auf ein Fahrprogramm gemäß der im Fahrgeschwindigkeitsregelungs-Betrieb mitlaufenden Fahraktivität plus überlagerter Steigungsberechnung und gegebenenfalls Sonderfunktionen.

Allgemein läßt sich dabei sagen, dass eine Ausblendung der Fahreraktivität erfolgt bei Erhaltung der Flexibilität mehrerer Fahrprogramme und deren Schaltkennlinien zur Reaktion auf äußere Einflüsse auf das Fahrzeug. Dies bedeutet, dass der Einsatz der erfindungsgemäß ausgestalteten Fahrgeschwindigkeitsregelung nicht nur auf manuelle Betätigung beschränkt ist, sondern auch im ACC-Betrieb eingesetzt werden kann.

In der nachstehenden Graphik ist auf der Abszisse die Getriebeabtriebsdrehzahl und auf der Ordinate die Pedalstellung in Prozent abgetragen. Man erkennt die zu den einzelnen Fahrprogrammen gehörenden Schaltkennlinien mit dem Hysteresebereich. Vorteilhafte Fahrprogramme sind in der anschließenden Tabelle unter Berücksichtigung der Fahrbahnneigung angegeben.

Die Getriebesteuerung wechselt also abhängig von den äußeren Einflüssen, d. h. der Fahrbahnneigung, in eines der oben stehenden gesonderten Fahrprogramme, wenn im Zustand "Setzen" der Fahrgeschwindigkeitsregelung der Fahrer einen manuell gestarteten Befehl abgibt.

Wird der Betrieb der Fahrgeschwindigkeitsregelung beispielsweise durch Abbremsen oder Beschleunigung des Fahrzeuges verlassen, so geht dieses in den Zustand "Wiederherstellen" über. Die Steuerung kann nun so eingestellt werden, daß der Fahrer sofort zu einem der ausgewählten gesonderten Fahrprogramme zurückkehren will oder erst nach Erreichen des Zielzustandes "Setzen" die Fahrgeschwindigkeitsregelung wieder aktivieren will. Dieser Zustand kann vom Fahrer direkt oder von der ACC-Einheit ausgelöst werden.

Eine Variante des erfindungsgemäßen Verfahrens zur Steuerung des Automatgetriebes kann darin bestehen, dass der Fahrgeschwindigkeitsregelung ein zusätzliches Eingabefeld "Setzen auf maximal zulässige Geschwindigkeit" zugeordnet wird, wodurch dem Fahrer ein automatisches Setzen der Sollgeschwindigkeit, die angepaßt ist an eine Richtgeschwindigkeit, z. B. für die Autobahnen oder eine zulässige Geschwindigkeit für Stadtfahrt oder ein Wohngebiet oder eine reduzierte Geschwindigkeit, z. B. nach einer Gefahrenmeldung eines Unfalls, eines Staus oder Glatteis, je nach aktueller Straßenposition ermöglicht. Die Ermittlung der Sollgeschwindigkeit erfolgt dabei über ein Informationssystem, z. B. ein GPS oder ein RDS, das Umgebungsinformationen über Art der Straße und weitere wichtige Ereignisse liefert.

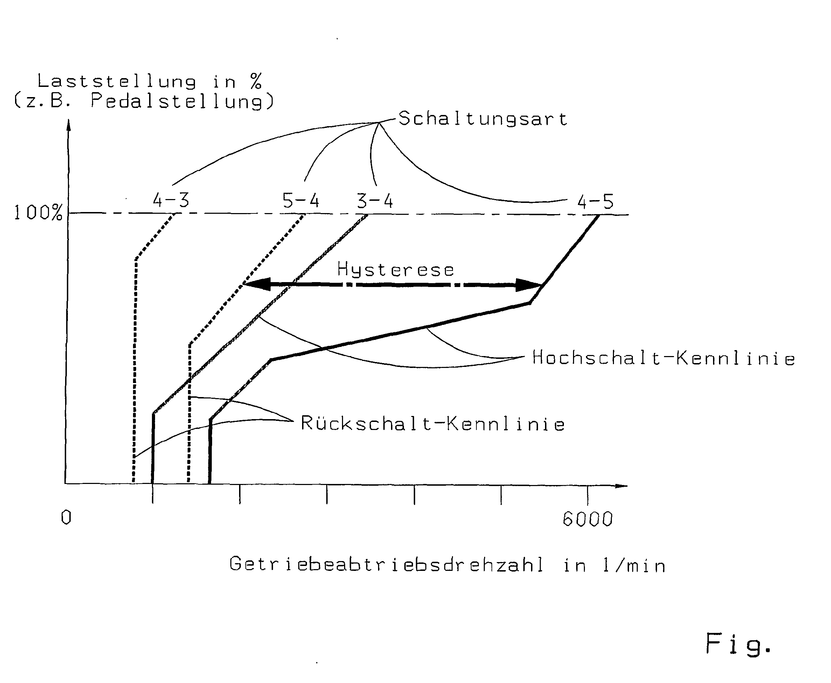

## Patentansprüche

1. Verfahren zur Steuerung eines Automatgetriebes für ein Kraftfahrzeug, das mit einer Fahrgeschwindigkeitsregelung versehen ist, wobei bei manueller Aktivierung der Fahrgeschwindigkeitsregelung im Zustand "Setzen" durch den Fahrer in ein Fahrprogramm gewechselt wird zur konstanten Einhaltung der bei der Aktivierung anliegenden Geschwindigkeit des Kraftfahrzeuges und das verlassen wird sowie das Kraftfahrzeug automatisch oder durch den Fahrer abgebremst oder durch den Fahrer beschleunigt wird und **dadurch** in den Zustand "Wiederherstellen" übergeht, worin bei Aktivierung der Fahrgeschwindigkeitsregelung im Zustand "Setzen" das Fahrprogramm als Funktion der Fahrbahnneigung insbesondere äußerer Einflüsse auf das Kraftfahrzeug und als Funktion eines vorgegebenen Fahrmodus aus einer Gruppe von Fahrprogrammen ausgewählt wird, **dadurch gekennzeichet, dass** bei Änderung der Fahrbahnneigung insbesondere der äußeren Einflüsse ein anderes Fahrprogramm aus der Gruppe von Fahrprogrammen automatisch ausgewählt wird und dass bei Deaktivierung der Fahrgeschwindigkeitsregelung und anschließender Aktivierung des Zustandes "Wiederherstellen" die Getriebesteuerung so eingestellt werden kann, daß die Fahrgeschwindigkeitsregelung und damit die Auswahl eines entsprechenden Fahrprogramms sofort oder erst nach Erreichen des Zustandes "Setzen" aktiviert werden soll.

2. Verfahren nach Anspruch 1, **dadurch gekennzeichnet, dass** die Bestimmung der Fahrbahnneigung über eine Fahrwiderstandberechnung erfolgt.

3. Verfahren nach Anspruch 1, **dadurch gekennzeichnet, dass** die Bestimmung der Fahrbahnneigung über einen Steigungssensor erfolgt.

4. Verfahren nach Anspruch 1, **dadurch gekennzeichnet, dass** die Bestimmung der Fahrbahnneigung über ein GPS erfolgt.

5. Verfahren nach einem oder mehreren der vorhergehenden Ansprüche, **dadurch gekennzeichnet, dass** die Fahraktivitätsberechnung bei aktivierter Fahrgeschwindigkeitsregelung im Hintergrund mitläuft ohne direkten Einfluß auf die Auswahl der Fahrprogramme.

6. Verfahren nach einem oder mehreren der vorhergehenden Ansprüche, **dadurch gekennzeichnet, dass** bei Deaktivierung der Fahrgeschwindigkeitsregelung ein vordefiniertes festes Fahrprogramm mit nur einer Schaltkennlinie ausgewählt wird.

7. Verfahren nach Anspruch 6, **dadurch gekennzeichnet, dass** als vordefiniertes festes Fahrprogramm das dem zuletzt vor der Deaktivierung der Fahrgeschwindigkeitsregelung gewählte Programm nächstliegende Normalfahrprogramm ausgewählt wird.

8. Verfahren nach Anspruch 6, **dadurch gekennzeichnet, dass** als vordefiniertes festes Fahrprogramm das der im Hintergrund mitlaufenden Fahraktivität entsprechende Fahrprogramm mit überlagerter Fahrbahnneigungsbestimmung ausgewählt wird.

9. Verfahren nach einem oder mehreren der vorhergehenden Ansprüche, **dadurch gekennzeichnet, dass** bei Aktivierung der Fahrgeschwindigkeitsregelung der Fahrer eine zusätzliche Funktion manuell auslösen kann zum automatischen Setzen einer Richtgeschwindigkeit oder einer zulässigen Geschwindigkeit oder einer reduzierten Geschwindigkeit als Funktion von der Fahrgeschwindigkeitsregelung zugeführten Daten, insbesondere durch ein GPS und/oder ein RDS.

## Claims

1. Method for controlling an automatic transmission in a motor vehicle equipped with cruise control /CC, with manual CC activation in the "setting" mode by the driver resulting in actuation of a driving mode which maintains the vehicle speed driven at the time of activation at a constant level, and with this mode being abandoned as soon as the vehicle is decelerated automatically or by the driver or is accelerated by the driver, which results in the "restore" mode being activated, in which CC activation in the "setting" mode results in selection of a driving program from a group of driving programs as a function of the road gradient, specially of external influences acting on the vehicle, and as a function of a preset driving mode, **characterized in that** any change in road gradient, especially any change in external influences, results in automatic selection of a different driving program from a set of driving programs, and **in that** after CC deactivation and subsequent activation of the "restore" mode, the transmission control system can be preset for immediate CC activation and selection of a driving program or for activation once the "setting" mode is available.

2. Method according to claim 1, **characterized in that** the road gradient is determined through road-resistance calculation.

3. Method according to claim 1, **characterized in that** the road gradient is determined by an inclination sensor.

4. Method according to claim 1, **characterized in that** the road gradient is determined via GPS.

5. Method according to one or several of the preceding claims, **characterized in that** with activated CC, the vehicle activity calculation processes are performed in the background (program) without direct influence on the selection of driving programs.

6. Method according to one or several of the preceding claims, **characterized in that** CC deactivation results in selection of a predefined permanent driving program with only one shifting characteristic.

7. Method according to claim 6, **characterized in that** the normal driving program closest to the program last selected prior to CC deactivation is selected as predefined permanent driving program.

8. Method according to claim 6, **characterized in that** the driving program with superimposed road inclination determination corresponding to the driving activity calculation processes performed in the background (program) is selected as predefined permanent driving program.

9. Method according to one or several of the preceding claims, **characterized in that** CC activation permits manual activation by the driver of an additional function for automatic setting of a recommended top speed, or an authorized speed, or a reduced speed as a function of CC-supplied data, especially by means of GPS and/or RDS.

## Revendications

1. Procédé de commande d'une boîte de vitesses automatique pour un véhicule automobile pourvu d'une régulation de vitesse, un programme de conduite étant sélectionné par le conducteur grâce à l'activation manuelle de la régulation de vitesse dans l'état "réglage" afin de maintenir constante la vitesse atteinte par le véhicule lors de l'activation et étant abandonné dès que le véhicule est freiné ou accéléré soit automatiquement, soit par le conducteur et passe donc à l'état "restauration ", dans lequel, lors de l'activation de la régulation de vitesse dans l'état "réglage", le programme de conduite est sélectionné en fonction de l'inclinaison de la route et des influences extérieures sur le véhicule et en fonction d'un mode de conduite prédéterminé parmi un groupe de programmes de conduite, **caractérisé en ce que**, lors d'une modification de l'inclinaison de la route et des influences extérieures, un autre programme de conduite est automatiquement sélectionné dans le groupe de programmes de conduite et **en ce que**, lors de la désactivation de la régulation de vitesse et lors d'une activation de l'état "restauration", la commande de la boîte de vitesses est réglée de façon à ce que la régulation de vitesse, et donc la sélection d'un programme de conduite correspondant, doit être activée immédiatement ou seulement après avoir atteint l'état "réglage".

2. Procédé selon la revendication 1, **caractérisé en ce que** la détermination de l'inclinaison de la route est effectuée par l'intermédiaire d'un calcul de la résistance à la marche.

3. Procédé selon la revendication 1, **caractérisé en ce que** la détermination de l'inclinaison de la route est effectuée par l'intermédiaire d'un capteur de pente.

4. Procédé selon la revendication 1, **caractérisé en ce que** la détermination de l'inclinaison de la route est effectuée par l'intermédiaire d'un GPS.

5. Procédé selon l'une ou plusieurs des revendications précédentes, **caractérisé en ce que** le calcul de l'activité de conduite lorsque la régulation de vitesse est activée, est effectué à l'arrière-plan sans influence directe sur la sélection des programmes de conduite.

6. Procédé selon l'une ou plusieurs des revendications précédentes, **caractérisé en ce que**, lors de la désactivation de la régulation de vitesse, un programme de conduite fixe prédéterminé avec une seule courbe caractéristique d'enclenchement est sélectionné.

7. Procédé selon la revendication 6, **caractérisé en ce que**, en tant que programme de conduite fixe prédéterminé, le programme de conduite normale le plus proche de celui sélectionné en dernier avant la désactivation de la régulation de vitesse est sélectionné.

8. Procédé selon la revendication 6, **caractérisé en ce que**, en tant que programme de conduite fixe prédéterminé, le programme de conduite correspondant à l'activité de conduite se déroulant à l'arrière-plan, avec une détermination superposée de l'inclinaison de la route, est sélectionné.

9. Procédé selon l'une ou plusieurs des revendications précédentes, **caractérisé en ce que**, lors de l'activation de la régulation de vitesse, le conducteur peut enclencher manuellement une fonction supplémentaire pour le réglage automatique d'une vitesse cible ou d'une vitesse admissible ou d'une vitesse réduite en fonction des données introduites dans la régulation de vitesse, notamment par l'intermédiaire d'un GPS et/ou d'un RDS.
